Europäisches Patentamt

European Patent Office

Office européen des brevets

(19)

(11) Publication number: 0 377 783
A1

# (12) EUROPEAN PATENT APPLICATION

(21) Application number: 89115893.3

(51) Int. Cl.⁵: **G06F 9/45**

(22) Date of filing: 29.08.89

(30) Priority: 11.01.89 US 296262

(43) Date of publication of application:
18.07.90 Bulletin 90/29

(84) Designated Contracting States:
**DE FR GB**

(71) Applicant: **International Business Machines Corporation**
**Old Orchard Road**
**Armonk, N.Y. 10504(US)**

(72) Inventor: **Haibt, Lois Mitchell**
**336 Jay Street**
**Katonah New York 10536(US)**
Inventor: **Hopkins, Martin Edward**
**300 Douglas Road**
**Chappaqua New York 10514(US)**
Inventor: **Markstein, Peter Willy**
**4202 North Hills Drive**
**Austin Texas 78731(US)**
Inventor: **Prener, Daniel Arthur**
**28 Hastings Avenue**
**Croton-on-Hudson New York 10520(US)**

(74) Representative: **Jost, Ottokarl, Dipl.-Ing.**
**IBM Deutschland GmbH Patentwesen und**
**Urheberrecht Schönaicher Strasse 220**
**D-7030 Böblingen(DE)**

(54) **Intermediate language format in an optimizing compiler.**

(57) An intermediate language representation of a program facilitates optimizing transformations on a computer program being compiled. The language representation is termed a "bag" which is a self describing piece of data that allows for a flexible, low cost, and accurate way of performing a desired operation. The bag carries computational information in a way that allows it to be reused later. In addition, it allows the final code generation to take advantage of the hardware for which the code is targeted.

EP 0 377 783 A1

## INTERMEDIATE LANGUAGE FORMAT IN AN OPTIMIZING COMPILER

The present invention generally relates to computer program compilers for generating object code from source code and, more particularly, to an intermediate language representation of a program which facilitates optimizing transformations on the program being compiled.

A computer instruction generally specifies several things to be combined in order to address storage. For example, a LOAD or a STORE instruction on the IBM System/370 series of computers specifies a displacement, a base register, and an index register whose values are added together to specify the location in storage to be used. Moreover, a compiler language usually provides for multiple index values for an array reference, each with an implied multiply involving the dimensions of the array and the length of a single item in the array, as well as other things like the adjustment for dimensions with lower bound other than zero, and the location of this array relative to an address value which might be kept in a base register. Previous compilers have used an internal representation which is essentially a binary tree. Using this representation, only one result could be specified for each operation, and usually with only two input operands. A flexible way of representing all these addressing values is needed to make it easier for the compiler to combine parts of one addressing computation with the same computations used in another addressing computation and to take advantage of various features provided by hardware architecture to make addressing computations more efficient.

It is therefore an object of the present invention to provide a way to make it easier for a compiler to do optimizing transformations.

It is another, more specific object of the invention to provide an intermediate language representation of a program which allows the carrying of computational information for later use in the compilation process.

According to the invention, all of the addressing operands are marked with a bit called "Used to Define Storage" which indicates that there is an implied addition of these operands together to be used in addressing some location in memory, generally for a LOAD or a STORE operation. By marking the operands called "stride" with a bit called the "Implied Multiply Bit", it is possible to indicate that they are to be multiplied with the following operand, rather than the implicit addition which would otherwise be done. This makes it easier for the compiler optimization to take advantage of hardware in which the instruction includes provision for a "free" multiply by certain values (typically 2 or 4 or 8, used to get "word" addresses in a memory which is "byte" addressed).

This format allows for multiple results and multiple input operands. All parts of an indexing computation are kept together, again to make the analysis of the intermediate language (and its optimization) easier. When indexing operations are listed as a sequence of binary operations, an unnecessary ordering is imposed and finding commonality is harder because other indexing operations may not have the same ordering. It is also more difficult to take full advantage of computer architecture features such as the RX instruction format of the IBM System/370 which has three components of the address in a single instruction.

In addition, when compiling for a machine with an implied multiply as part of addressing operations, it is much easier to discover that for all the parts of the addressing computation, the implied multiplies are all by the length of the operand, and by factoring that out of all the components of the address, to get a "free" multiply as part of the LOAD operation. The objectives of this invention are realized by encoding each instruction of the intermediate language as a sequence of "bags". The bag is the critical data structure from which everything is constructed. The structure of the bag thus provides the novel features of the instant invention.

A method of the invention facilitates optimizing transformations on a computer program being compiled by constructing a bag data structure which contains a TAG field that identifies data represented by the bag. The remaining data in the bag is partitioned into one or more fields as required by a data type that the bag represents. The remaining data provides computation information for later use in the compilation process. The bag data structure is used to represent the intermediate language form of a computer program being compiled.

The foregoing and other objects, aspects and advantages of the invention will be better understood from the following detailed description of a preferred embodiment of the invention with reference to the drawings, in which:

Figure 1 is a block diagram representing a "bag" as having three fields;

Figure 2 is a block diagram representing a "bag" as having two fields; and

Figure 3 is a block diagram representing a "bag" as having one field.

In the intermediate language of the compiler according to the invention, the basic unit of data representation is a fixed-length word, called a "bag". Bags are used throughout the compiler, particularly in the operand format of the Computation Table and the Intermediate Language Dictionary. Part of each bag is used to keep track of what kind of value that bag represents, and another part for how it is used in a particular instance.

For example, the upper bound of an array may be an integer, a simple variable represented by an Intermediate Language Dictionary index of the entry for that variable, or the result of calculating some expression represented by a Symbolic Register number for the computation. The bag for the upper bound of the array can then be treated uniformly no matter which of these it represents. It can be stored, passed as an argument, take part in computations, etc.

The first bag of an instruction contains a TAG field marking it as the beginning of an instruction, a RELPOS field containing an encoded value for the operation code, and an IND field which contains the count of the bags in the instruction. Succeeding bags each contain a TAG field whose value shows to which table reference is made, a RELPOS field containing a reference to some operand for the instruction, usually a table reference), and an IND field which contains bits showing how the operand referenced in the bag enters into the instruction.

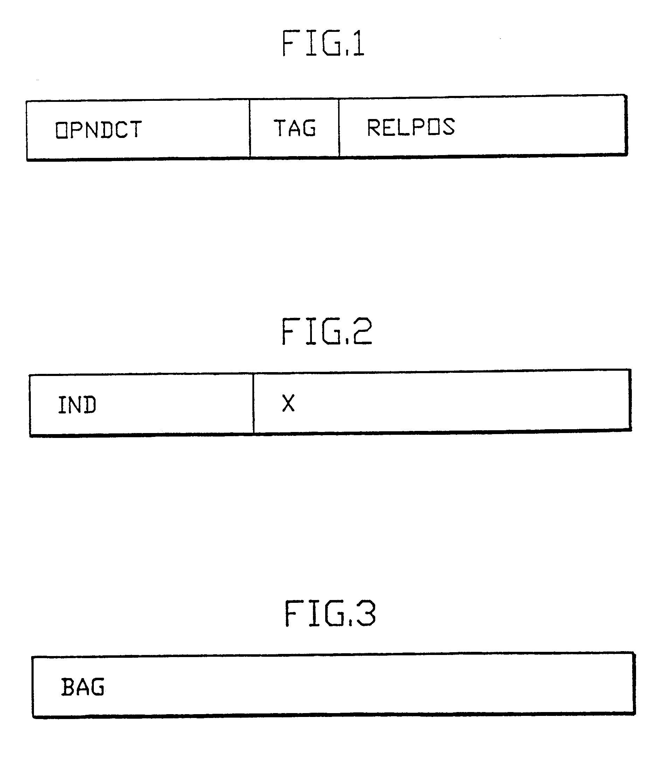

As shown in Figures 1, 2 and 3, a bag can be viewed in several ways. In Figure 1, the bag is subdivided into three fields. The OPNDCT field contains the operand count which can be used to store a small number, for example, the number of bags in an Intermediate Language instruction. The TAG field identifies which table this bag refers to. The RELPOS field is a specific reference for an operand. It provides an offset or index relative to the beginning of the table. In Figure 2, the bag is subdivided into two fields. The IND or indicator field is for indicators and flag bits. The X or index field combines the TAG and RELPOS fields. It can be used to index a table with index values in a range value appropriate to that table. In Figure 3, the bag is a single field, and in this form, it is usually used when copying it or passing it to or returning it from a subroutine.

The TAG field is used to identify whether the bag represents an index into the Intermediate Language Dictionary, the integer value table, the real value table, a symbolic register number, an opcode number, etc. The tag value keeps track of what kind of value each bag represents. The contents of the tag field are used as part of the index value when indexing into one of these tables. The various tables are declared with separate index ranges such that the high order bits of the table index have the value matching the appropriate tag value for that table. For example, if the RELPOS field is sixteen bits and the TAG field is three bits, then a table corresponding to a TAG value of three would be indexed with values starting at hexidecimal value 30001, 30002, etc. and the table corresponding to TAG value four would be indexed with hexidecimal values 40001, 40002, etc. As a result, such references are self-checking when using a compiler which performs index checking, such as Ada, Pascal, Modula II, or PL/1. Since it does range checking at very low cost, many inadvertent references to the wrong table, or unforeseen uses of the value of a bag can be found easily and quickly during the compiler development process.

Some of the bits in the indicator field IND are used to indicate a result value of an instruction, an input value used in an instruction, a register which defines the length of an operand, a part of the addressing information for a storage operand, an end of group addressing information for a storage operand, storage alignment information, a label, a trap register (not a real operand), and an implied multiply of the next operand. The Result and Uses bits simply mark the result(s) of the specified operation (e.g., LOAD or ADD) and the input(s). For example, a divide instruction

D r130,r131 = r128,r129

(Quotient,Remainder = Dividend,Divisor),

where r130, etc. are symbolic names for registers, is represented as follows:

| IND | TAG | RELPOS | Comments |
|---|---|---|---|
| 000000000100 | operation | D | 4 opnds, opcode is Divide |
| 1000000000000 | register | r130 | result |
| 1000000000000 | register | r131 | 2nd result |
| 0100000000000 | register | r128 | used (input) |
| 0100000000000 | register | r129 | used (input) |

A floating point load instruction such as

LFS fp135 = A(r15,16,r133,4,r134,40,-44)

Register = Array name(base,displacement, index,stride,index,stride, adjustment)

would be represented as follows:

3

| IND | TAG | RELPOS | Comments |
|---|---|---|---|
| 000000001001 | operation | LFS | 9 opnds, opcode is Load Float Short |
| 100000000000 | register | fp135 | Floating point register - result |
| 010010000000 | register | r15 | GPR - Used, UTDS (used to define storage) (Base Register) |
| 010010000000 | integer | 16 | integer - Used, UTDS (displacement of A relative to a base) |
| 010010000010 | integer | 4 | integer - Used, UTDS, Mpy (stride for I) |
| 010010000000 | register | r133 | GPR - Used, UTDS (i) |
| 010010000010 | integer | 40 | integer - Used, UTDS, Mpy (stride for j) |
| 010010000000 | register | r134 | GPR - Used, UTDS (j) |
| 010010000000 | integer | -44 | integer - Used, UTDS (array starts at A(1,1), not A(0,0)) |
| 010011000000 | dictionary | A | dictionary index for A - Used, UTDS, ESOP (end subset of operations) |

Multiple results make it easier to optimize such sequences as

c = remdr(a,b)

d = quotient(a,b),

which in the internal representation according to the invention appears as

r1,r2 = a/b

c = r2

r1,r2 = a/b

d = r1

so that the divides can be recognized as duplicates, keeping only one, and resulting in

r1,r2 = a/b

c = r2

d = r1.

Other uses for multiple results are in subroutine and function calls, and in array and structure assignments. When only two input operands are allowed, it is considerably more difficult to find commonality in a case such as

a(i,j,k) + b(n,j,k).

Using the intermediate language format according to the invention, the form would be like the following:

load r1 = a(basea,dispa,i,stridea1,j,stridea2, k,stricea3,adjustmenta)

load r2 = b(baseb,dispb,n,strideb1,i,strideb2, k,strideb3,adjustmentb)

add r3 = r1 + r2

In contrast, the more traditional form would look like the following:

mpy r1 = i,stridea1

mpy r2 = j,stridea2

add r3 = r1,r2

mpy r4 = k,stridea3

add r5 = r3,r4

add r6 = r5,adjustmenta

load r7 = a(basea, dispa, r6)

mpy r8 = n,strideb1

mpy r9 = j,strideb2

add r10 = r8,r9

mpy r11 = k,strideb3

add r12 = r10,r11

add r13 = r12,adjustmentb

load r14 = b(baseb, dispb, r13)

add r15 = r7,r14

In either format, it can be seen that if stridea2 = strideb2, then the multiply of j by stridea2 (in r2) = multiply of j by strideb2 (in r9). However, if basea = baseb, and adjustmenta = adjustmentb, then in the format with multiple operands, it is easier to discover that the base, adjustment and the product of j and its stride can be computed once and used as part of both addressing computations by rearranging the order in which parts of the addressing are computed. In addition, when compiling for a machine with an implied multiply as part of addressing operations, it is much easier to discover that all parts of the addressing computation the implied multiples are all by the length of the operand, and by factoring that out of all the components of the address, there is a "free" multiply as part of the LOAD operation.

In summary, the method according to the invention facilitates the representation of an intermediate language from of a computer program which is being compiled by a compiler. Preferably, the compiler is an optimizing compiler, and when the compiler is coded in a language such as Ada, Pascal, Modula II or PL/1, the invalid use of an index encoded in the bag results in an exception condition, thereby making it easier to find inadvertent references to a wrong table. The method uses tables including but not limited to a symbol dictionary, an execution list in which each member points to an instruction table in which actual instructions are represented, and possibly one or more tables of self-defining data (one table for each format of such data that the intermediate language supports). The intermediate language instructions are represented as a sequence of bags. The distinctive feature of the "bag" format is the combination of self-defining variables, checking of table references and the efficient implementation it makes possible.

## Claims

1. A method which facilitates the analysis of intermediate language representing a program being compiled and the optimizing transformations on a computer program being compiled comprising the steps of:
constructing a bag data structure which contains a TAG field that identifies data represented by the bag, the remaining data in the bag being partitioned into one or more fields as required by a data type that the bag represents, said remaining data providing computation information for later use in a compilation process; and
using the bag data structure in representing the intermediate language form of a computer program being compiled.

2. The method recited in claim 1 wherein the step of using is performed by the step of representing intermediate language instructions as a sequence of bags.

3. The method recited in claim 2 wherein a first bag in the sequence of bags contains a TAG field marking it as the beginning of an instruction, a RELPOS field containing an encoded value for an operation field, and an IND field which contains a count of the bags in an instruction, and wherein succeeding bags in the sequence of bags each contain a TAG field whose value shows a table to which reference is made, a RELPOS field containing a reference to an operand, and an IND field containing information on how the referenced operand is to be used.

4. The method recited in claim 2 wherein the bag data structure includes an IND field which represents how a data item named by the bag is to be used or how a sequence of data items are related, further comprising the step of referencing the IND field in the compilation process.

5. The method recited in claim 4 wherein the IND field contains information as to whether the named data item is consumed or produced by a data structure in which the bag is contained.

6. The method recited in claim 4 wherein the IND field contains information as to whether the named data item is being used for the last time.

7. The method recited in claim 4 wherein the IND field contains information as to whether the bag is a member of a subgroup of bags in a structure of bags.

8. The method recited in claim 4 wherein the IND field contains information as to how data in the bag interacts with other bags in a structure containing the bag.

9. The method recited in claim 1 wherein the bag data structure contains an X field which contains immediate data or a pointer into a table of data, said X field having a TAG subfield which identifies the immediate data or the table to which X points and a RELPOS subfield which contains the immediate data or a portion of the pointer.

10. The method recited in claim 1 wherein the bag data structure contains a counter field which indicates how many bags are used to describe a larger data structure.

11. The method recited in claim 1 wherein the bag includes an index to one of a plurality of tables each of which contain data, where said index is so constructed that the index is only valid when referencing a specific one of the plurality of tables, further comprising the step of generating an exception condition during a compilation process when an invalid use of the index encoded in the bag is detected.

12. The method recited in claim 1 wherein tables of data are stored for reference by the bag data structure, said tables including a symbol dictionary and an execution list, further comprising the step of representing intermediate language instructions as a sequence of bags.

13. The method recited in claim 12 wherein said tables further include one or more tables of self-defining data, one table for each format of such data that the intermediate language supports, such formats including one to define intermediate language operation codes.

14. The method recited in claim 12 wherein the execution list contains a plurality of members, each of said members points to an instruction table in which actual instructions are represented.

15. The method recited in claim 1 wherein the step of using is performed by an optimizing compiler, said step of using comprising the step of representing intermediate language instructions as a sequence of bags, the first of said bags having a TAG field marking it as a beginning of an instruction, a RELPOS field containing an encoded value for an operation field, and an IND field which contains a count of bags in an instruction.

6

# FIG.1

| OPNDCT | TAG | RELPOS |
|--------|-----|--------|

# FIG.2

| IND | X |
|-----|---|

# FIG.3

| BAG |
|-----|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 667 290 (GOSS et al.)<br>* Column 6, lines 1-64; column 11, line 23 - column 12, line 26; figures 1,2 * | 1,2,12 | G 06 F 9/45 |
| A | | 3-11,13 -15 | |
| | --- | | |
| X | SIGPLAN NOTICES, vol. 14, no. 7, 8th August 1979, pages 188-200, ACM, US; D.J. FRAILEY: "An intermediate language for source and target independent code optimization<br>* Page 189, right-hand column, line 17 - page 197, left-hand column, line 8 * | 1,2,12 | |
| A | IDEM | 3-11,13 -15 | |
| | --- | | |
| A | COMPUTER DESIGN, vol. 23, no. 13, November 1984, pages 147-153; L. WOLF et al.: "Portable compiler eases problems of software migration"<br>* Page 149, right-hand column, line 37 - page 150, left-hand column, line 50 * | 1,2,9 | TECHNICAL FIELDS SEARCHED (Int. Cl.5)<br><br>G 06 F |

The present search report has been drawn up for all claims

| Place of search | Date of completion of the search | Examiner |
|---|---|---|
| THE HAGUE | 13-11-1989 | WILTINK J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)